Europäisches Patentamt

European Patent Office

Office européen des brevets

(11) Publication number: **0 162 633**
**B1**

# (12) EUROPEAN PATENT SPECIFICATION

(45) Date of publication of patent specification: **27.07.88**

(51) Int. Cl.⁴: **G 11 B 7/26**

(21) Application number: **85303266.2**

(22) Date of filing: **09.05.85**

(54) **Methods of preparing and applying subbing layers for optical data disks.**

(30) Priority: **16.05.84 US 611044**

(43) Date of publication of application:
**27.11.85 Bulletin 85/48**

(45) Publication of the grant of the patent:
**27.07.88 Bulletin 88/30**

(84) Designated Contracting States:
**BE DE FR GB IT NL SE**

(56) References cited:
**EP-A-0 098 046**
**DE-A-2 016 422**
**US-A-4 224 381**
**US-A-4 340 655**
**US-A-4 430 387**

(73) Proprietor: **UNISYS CORPORATION**
**Burroughs Place**
**Detroit Michigan 48232 (US)**

(72) Inventor: **Ho, Wu-Jing**
**19355 Sherman Way**
**Reseda CA 91355 (US)**
Inventor: **Bell, Irving J.**
**20651 Parthenia Street**
**Canoga Park CA 91306 (US)**
Inventor: **Lee, N.**
**3472 Avenida Ladera**
**Thousand Oaks CA 91362 (US)**

(74) Representative: **Kirby, Harold Douglas Benson**
**et al**
**G. F. Redfern & Company Marlborough Lodge**
**14 Farncombe Road**
**Worthing West Sussex BN11 2BT (GB)**

Courier Press, Leamington Spa, England.

# 0 162 633

**Description**

This invention relates to optical recording of digital data on a rigid substrate and more particularly to smoothing layers for such substrates.

BACKGROUND

Improvements in high-speed digital magnetic media (e.g., disks, tapes) are increasingly difficult to obtain. A better high-speed, mass storage medium is needed, one more economical, compact, and archival.

Optical disk recording is attractive because it allows instantaneous playback, very fast random access, high recording density (better than magnetic recording), and archival storage (e.g, for several years or longer under severe EDP environment). And a particularly promising technique employs an optical disk system that uses laser recording to store encoded information at very high data rates with extremely high density.

Subbing, generally

Workers in this, and related, arts are familiar with the use of smoothing (subbing) layers applied to metal disks to improve the smoothness thereof (e.g., see "Optical Disk Systems Emerge" by Bartolini, et al., IEEE Spectrum, August 1978, p. 26 et sequ.).

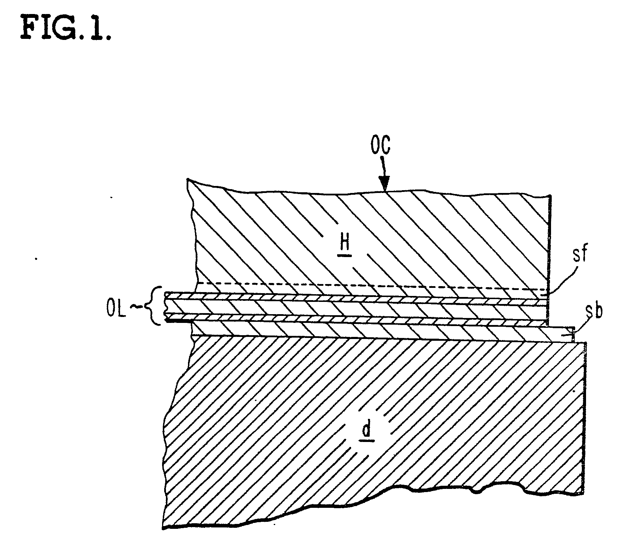

Aluminum disks for use in digital data recording by optical means ("O.D. disks") are normally supplied with a surface that is too rough to be used for acceptable optical recording layers and thus typically require such a "subbing layer" (e.g., see FIG. 1 and aluminum disk (d), with subbing (sb) on which some sort of optical recording structure ("OL"), is to be coated, with a certain overcoating, ("OC") on this). Such recording structures are known in the art (e.g., "tuned media" using a "dark mirror" or optical tri-layer effect; for instance, see U.S. 4,222,071 to *Bell*, et al.; also see "Review of Optical Storage Media" by *Zech*, SPIE Vol. 177, Optical Information Storage, 1979, page 56 et sequ.; also see "optical Recording Media Review" by Bartolini, parge 2 et sequ. of 1977 SPIE Vol. 123, "Optical Storage Materials and Methods"; and see "Melting Holes in Metal Films for Real-Time, High Density Data Storage" by Cochran and Ferrier, SPIE Proceedings, August 1977, pages 17—31; *"Anti-Reflection Structures for Optical Recording"* by Bell and Spong, Journal of Quantum Electronics, Vol. QE 14, No. 7, July 1978; and for general prior art, see exemplary article: "Optical Storage Materials and Methods", SPIE Proceedings, Vol. 177, Optical Information Storage, 1979, page 56; or see "Optical Properties of Tellurium Films Used for Data Recording" by Ash and Allen, SPIE Proceedings, Vol. 222, 1980; "Design and Production of Tellurium Optical Data Disks" by Rancourt, SPIE Proceedings, No. 299, 1981).

Provision of such a subbing layer that is smooth enough, and thick enough, to cover a disk's rough surface (e.g., to yield optical digital readout with acceptable S/N) is an object of this disclosure. More particularly, it is an object hereof to teach fabrication of such media also satisfying other OD disk criteria, such as extended archival life (e.g., order of at least several years).

A rough substrate, or inadequate subbing, can determine the quality (e.g., density, defect incidence, error rate) of such optical recording. For instance, the expected minimum bit-error-rate (BER) may be impossible to realize unless the subbing is sufficiently free of oil, fingerprints, dust and other contaminants and is sufficiently level and uniform.

One feature hereof is to teach such subbing, and especially preferred formulations therefor.

Conventional subbing is not adequate for these goals; for instance, some have proposed a polymer-insolvent coating (suitable resin-in solvent vehicle) as a subbing formulation for related purposes; but these allow intrusion of far too much contaminnant (e.g., moisture) and cannot give the desired archival life.

A more particular feature is to teach the use of unique "radiation-cured" polymeric mixtures for such "subbing", preferably on relatively common "Winchester" disks (i.e., aluminum disks, of the kind regularly used in present magnetic digital recording).

Such "radiation-curable" (R—C) coatings facilitate quick-curing, i.e., a smoothing layer that cures rapidly compared with other types of coatings (such as those based upon polymer deposition from a solvent solution). They require less cure-energy than solvent-based coatings and are less likely to retain solvents that can volatilize during the media deposition process later.

The invention is set out in claim 1.

A method according to the precharacterising part of claim 1 is known from EP—A—98046. Anodising an Al-substrate is known from US—A—4430387.

Example I

In general, a selected subbing mix is preferably applied to a "Winchester disk" (of the type currently in common use as the substrate disks for magnetic recording of digital data for use in high-speed data processing).

It has been discovered, as a feature hereof, that it is preferable to anodize such disks in a chromic acid bath; then to pre-clean them in a certain fashion, and then to apply a certain acrylate type (R-c pre-polymer) subbing mixture.

2

# 0 162 633

## Substrate, Anodizing

The mentioned preferred substrate is a relatively common moderate-cost, 14 in. or smaller diameter, Winchester disk (e.g., of #5086 aluminum alloy, about 1,9 mm (75 mils) thick, with a surface polished or diamond-turned to normal smoothness).

The function of anodizing is to oxidize the aluminum disk to form a harder layer of aluminum oxide on its surface. Anodizing improves the corrosion resistance of the aluminum disk so that it can give extended archival life in the optical disk application. This process also works as a "pre-cleaning" to improve adhesion of the subsequent (polymer) subbing coat. With this processs, the usual primer coating can be eliminated.

There are several types of anodizing; here we prefer to use a "Type I, class I" chromic acid anodizing. The substrate we prefer is a "polished disk", rather than a diamond-turned (which can exhibit deep turning grooves on its surface — and these grooves may be replicated in the subsequent subbing coat.

During anodizing, the polished aluminum disk is "blast-dusted" [dust particles blown off with a pressurized-nitrogen gun], then vapor degreased with methyl ethyl ketone (MEK). In the chromic acid bath of 37°C $\pm$ 2,7°C (100°F $\pm$ 5°F), a D.C. voltage is applied, and increased from 5 V to 40 V with increasing rate of 5 V/min., and current density of 2,15 mA/cm$^2$ (2 Amps/ft$^2$). The anodizing should be "saturated" after about one hour.

Next, the non-anodized substrate is rinsed with cold D.I. water, then with hot deionized water for about 5 min. There should be no further sealing or dyeing after the drying is finished.

After such anodizing, an anodized thickness of about 2,5—5 mm (0.1 mil to .2 mil) will be seen. The (anodized) surface finish resulting will be as smooth and flat as necessary (e.g., max. "waviness-depth" is ~0.22 $\pm$ .02 U'''/in over range of 10 mm) and is quite suitable for the subsequent subbing coat.

## Pre-cleaning of Anodized Substrate

Pre-cleaning the anodized substrate is important if a good subbing coat is to be realized. It affects adhesion and can reduce or eliminate surface defects. The anodizing may be thought of as a step in the pre-cleaning sequence. It changes the surface metal structure of the aluminum disk, and should leave a more uniform surface oxide; something that apparently contributes to superior adhesion (of subbing onto anodized aluminum surface).

After anodizing, pre-cleaning is continued in a "clean room" atmosphere according to the following:

1. Ultrasonic agitation of disk surface submerged in a 1% solution of detergent (such as Liquinox) in deionized (D.I.) water (>10 megohms) for 3 min.
2. Rinse with filtered (to 0.2 um) running D.I. water (spray) for 1 min.
3. Rinse in a 3-step "cascade" rinse of filtered D.I. water, for 3 min. in each cascade.
4. Spray with filtered isopropyl alcohol (I.P.A.) for 1 min.
5. Ultrasonic agitation of disk surface in I.P.A. for 3 min.
6. Degrease-soak in I.P.A. for 5 min., or until hot.

## Subbing Formulation "SB—1"

For various reasons, and according to a feature hereof, it is found preferable to formulate the subbing mixture to comprise a radiation-cured acrylate pre-polymer, such as an acrylated epoxide like "SB—1" below — along with compatible additives, as needed for cross-linking, cure-control, wetting and photoinitiation. This acrylated epoxide will be recognized as somewhat pre-polymerized and of relatively high modular weight, (e.g., such a ligomer or "pre-polymer" formulation will be understood as including acrylates and/or acryamides or other like groups adapted to be polymerized, or further polymerized, by a radiation-cure like that described).

A preferred subbing formulation SB—1 is formulated as follows:

| SB—1 | Parts, by wt. |
|---|---|
| Celrad #3701 (Celanese Chemical Co.) | 36 |
| TMPTA | 25 |
| 2-ethylhexyl acrylate (EHA) | 36 |
| Zonyl FSN (DuPont) | 1 |
| "Irgacure #651" (Ciba Geigy Corp.) | 2 |
| Total | 100 |

The "Celrad 3701" is characterized as a diacrylated ester of bisphenol A epoxy resin. Such an "acrylated epoxide", a short-chain polymer with acrylate end-groups, has relatively little cure-shrinkage, good tensile strength, good stability (chemical and thermal), and is found to (here) render a good tough, smooth coating, especially on such disks so-cleaned and so-primed.

3

Now, workers will appreciate that a high molecular weight coating is desirable, being less susceptible to temperature change and involving less cure-shrinkage and associated stress. But high molecular weight materials exhibit a relatively high viscosity and so are inconvenient (slow) to filter, (e.g., through a 47 mm diameter, 0.45 um pore filter).

Here, it has appeared feasible to use a relatively high molecular weight ingredient (like the acrylate epoxide pre-polymer), but to cut viscosity with otherwise useful low-viscosity additives, like the 2-ethylhexyl acrylate.

The TMPTA (trimethyl-ol propane triacrylate) is a multi-functonal monomer used to promote cross-linking, accelerate cure and lower viscosity (at this concentration — less TMPTA allows cure-time to lengthen). In promoting cross-linkage, the TMPTA enhances the toughness and tensile strength of the cured coat; however it can cause a good deal of shrinkage during cure. TMPTA may be replaced by another like low-viscosity cross-linker, such as TMPT-ma (trimethyl-ol propane trimethacrylate) as workers will understand.

The 2-ethylhexyl acrylate (EHA) is a viscosity-reducing organic diluent that reacts with the "multi-functional" TMPTA and that bonds well with the resulting polymer coat and is compatible therewith (e.g., no constituents that will likely migrate and attack the subbing polymer or other coatings on the disk). It yields a good viscosity for these purposes (assume "clean-room" conditions, about 20°C (68°F) ambient).

A multi-functonal monomer like TMPTA (three reactive groups) will likely need a co-constituent like EHA to polymerize with any of its groups not cross-linked with the acrylated epoxide — otherwise, such unreacted groups can react and break-down the coating during service life (e.g., react with ambient oxygen, cause cracking of the subbing, etc.). The EHA diluent may, in certain cases, be replaced with other such additives like styrene (see S—2, below) or iso-decyl acrylate (though the latter is a bit more prone to water absorption and associated swelling with some loss of strength).

The Zonyl FSN is characterized as a nonionic "fluorosurfactant" apt as a "surfactant" (wetting agent) here. It might be replaced with other like compatible surfactants in certain cases (e.g., FC—430, by 3M), through none can be recommended. Surprisingly, some other closely similar surfactants are unsatisfactory. Other "Zonal" (TM) type monomer surfactants (fluorocarbon methacrylate from DuPont) should also be adequate as a wetting agent.

The "Irgacure 651" (2-dimethoxy-2 phenyl aceto-phenone) serves as the photo-initiator. Other like photo initiators may be substituted in most cases (e.g., Irgacure #184, or Darocure #1173 from E. M. Industries — note: Irgacure #184 needs longer cure time). Some photo initiators may be unsuitable under these conditions (cf. poor solubility, different cure-radiation needed, and some are too oxygen-sensitive; some fail to adequately "quench" the desired photo-cure).

The components are all combined and heated, in air, to about 24°C (75°F) under "clean-room" conditions, with stirring, until the mixture becomes a homogeneous liquid. This liquid is then filtered while still warm through a series of filters to remove particles larger than 0.45 um. The filtered liquid is then degassed by placing it in a vacuum of 84 KPa—97 KPa (25—29 in Hg) for 30—60 min prior to applying it to a disk. Here, a subbing coating about 20—40 um (microns) thick is assumed.

Application of Subbing; Curing

The subbing formulation (e.g., SB—1) will be understood as applied (e.g., 20—40 um thick and very uniform) to the aluminum disk surface anodized and cleaned as specified (unless adhesion is otherwise adequate).

One preferred technique is "spin-coating" as known in the art. Thus, the disk may be spun (e.g., at up to 80 rpm — or kept fixed) while the coating formulation is deposited on its surface. The disk is then spun (e.g., 150—400 rpm), sufficient to efficiently remove excess coating material; the speed/time of rotation depending upon the desired rate/degree of removal.

Such coating thicknesses between 10—50 um are found adequate to satisfactory smooth surfaces of the subject ("anodized") aluminum disks.

After the desired amount of coating is so distributed on the disk, radiation-curing is invoked. Here it is preferably photo-chemically cured, by (UV) radiation under an inert atmosphere.

More particularly, one exposes the coating to UV for about 1.5 min. before flushing with nitrogen to drive off all surrounding oxygen. Then cure is completed by continuing UV exposure for several min. under this nitrogen flush, while slowly rotating the disk (e.g., 20—50 rpm for total 4 min.). The "in-oxygen" UV pre-exposure is preferred — e.g., it is a bit slower than using a nitrogen-flush throughout, but seems to give a smoother finish and minimize any "replicating".

It is preferred to use "non-focused" UV illumination since — surprising to learn — focused UV light seems to cause "groove-replication" and "uneven cure" problems in the film (even where a diffuser is used). The non-focused UV light is found to give a more uniform exposure intensity. The non-focused UV beam p is passed through a quartz window with a trapezoid shape to expose all portions of the coating with the same light intensity. The window opening is wider at the outside area of the disk because there is more coating there. A 1000 watt UV lamp with a 127 mm (5 inch) arc length will be found satisfactory to illuminate the whole coating area evenly while disk is rotating [e.g., an American Ultraviolet Co. "Porta Cure" 1000 UV lamp, rated at 95 MW/cm at 218 mm (8.6 in) from the coating].

The subbing layer cured under these conditions will form a tough, strong coating that is very smooth

0 162 633

and level. It will not form any "globs", nor will it replicate grooves, etc., on the substrate surface. It also has a very good adhesion to the substrate. This is quite apt for superposing the mentioned optical recording layers.

Process Optimization

1. Small air bubbles may cause "pinholes" or "streamers" to appear in the smoothing layer; vacuum degassing of the solution and careful handling afterward can eliminate this.

2. Or pinholes may appear for no apparent reason, increasing in number with increasing disk rpm; proper pre-cleaning can eliminate this.

3. Or pinholes may appear where the disk surface is not "wet" properly, or where the coating is too thin to maintain its integrity; keeping disk rotation speed below about 200 rpm seems to minimize this.

RESULTS

The thickness of the smoothing layer is preferably between 20—30 um (less than about 10 um is not favored) and very smooth. A good, smooth subbing surface will be observed on such fully-polished or polished-anodized disk surfaces, with all the usual bumps, scratches, gouges and like anomalies satisfactorily "buried".

For instance, when such a smoothing surface is viewed under a (1000 ×) microscope it will be seen to be markedly, and dramatically, smoother than a very highly polished micro-fine aluminum disk (face). To be able to thus render such a "micro-fine" surface using such a simple, convenient, relatively inexpensive treatment (anodizing, cleaning, and subbing coat) is quite remarkable.

Also, this subbing will be observed to exhibit superior archival life and long-term stability — e.g., withstanding extended exposure to a rather extreme temperature/humidity cycling even with the mentioned "optical tri-layer" (e.g., no evident delamination or stress-cracking of tri-layer; no decomposition of subbing polymer; also no evidence that "low molecular weight components", like the surfactant, or photosensitizer or their by-products, had migrated and attacked the subbing or tri-layer or upset adhesion).

Even more significant, subbing smoothness will be so good that later deposition of prescribed optical tri-layers and satisfactory recording thereon is made possible — for instance, one can so record and readout wth good S/N level (order of 30 dB+) and a very low bit-error-rate.

And the so-cured so-aged subbing is immediately ready for service (e.g., heating, etc.) — e.g., without requiring any further aging cycle.

Workers will recognize that other related techniques and/or materials and associated adjustments may be substituted in appropriate cases, taking care to assure adequate stability (over extended archival life) and to avoid inducing stress-cracks (of superposed "tri-layer") or decomposition of subbing materials (e.g., volatilizing due to thermal effects or because of inadequate curing).

Radiation-curing is preferred over other superficially related methods, lke "peroxide curing" which is complex, hard to control, and apt to exhibit short "pot life" (e.g., workers will recognize that the peroxide cure rection is exothermic and subject to overheating, making it difficult to control and dangerous to handle — e.g., for good control, cure temperature must be kept low, thus extending cure-time; also gases are produced and, if the cure proceeds too quickly, these gases can't adequately escape and be dissipated, but can induce light-scattering, a "cloudy", semi-opaque coating — e.g., trapping gas bubbles).

Heretofore, a "primer coat", under the subbing, was thought necessary for good subbing results (e.g., to better resist moisture intrusion over extended service life, while maintaining good adhesion). That is, workers found it unsatisfactory to simply apply a subbing mixture to a bare un-primed aluminum disk surface, however precleaned — otherwise inadequate uniform smoothness, or a poor bond over extended service life, etc., could result. Somewhat surprisingly, this subbing coat (and others like it) seems to require no "primer" when applied to such an anodized surface (so-cleaned, etc.).

Also, other (preferably acrylated) like subbing formulations will be applicable in many such cases. Others will not. For instance, workers have at times suggested a "plain epoxy" smoothing coat for other different purposes (cf. for some common magnetic recording disks, an "epoxy-only" pre-layer is used as a "primer" for the magnetic oxide coating). Such epoxy systems have certain advantages (e.g., notoriously hard, readily "contact-cleaned" and relatively low cure shrinkage) — but they are rather expensive (equipment, processing time, materials); they usually render too coarse a surface (gross "holidays" can appear); and they can crystallize non-homogeneously (inducing "error zones"). Also, they are solvent-based, require a heat curing (UV is much cooler) and use materials with too brief a "pot life". Thus, an acrylated epoxy is preferred for the subbing.

Alternative Subbing Formulations

Workers will recognize that such an acrylated epoxy system (formulation SB—1) may be modified for various reasons. For instance, to lower viscosity, formulation SB—2 is given as follows:

5

| SB—2 | Parts, by wt. |
|---|---|
| Celrad 3701 | 36 |
| TMPTA | 25 |
| EHA | 36 |
| FC—430 (3M Co.) | 1 |
| Irgacure 651 | 2 |
| Total | 100 |

This replaces Zonyl FSN with a FC—430. FC—430 is a "fluorocarbon ester" apt as a surfactant. Its wettability might not be as good as Zonyl FSN. However, it produced a film about as good as SB—1.

| SB—3 | Parts, by wt. |
|---|---|
| CMD 1700 | 18 |
| Celrad 3701 | 18 |
| TMPTA | 25 |
| EHA | 36 |
| FC—430 | 1 |
| Irgacure 651 | 2 |
| Total | 100 |

Half of the Celrad 3701 in SB—2 is replaced with CMD 1700. CMD 1700 is an acrylated acrylic. It improves the color and (exterior) durability. However, it is apt to be quite brittle and not as chemically resistant as an epoxy. It tends to be more brittle and crack when subjected to a moist environment. Thus, SB—3 (and like subbing) is less preferred.

| SB—4 | Parts, by wt. (vs SB—2 |
|---|---|
| RDX 52225 ( Co.) | 24 ⎫ — (36 |
| Celrad 3701 | 24 ⎭ |
| TMPTA | 22 —— (25 |
| EHA | 24 —— (36 |
| FC—430 | 2 —— (1 |
| Irgacure 651 | 4 —— (2 |
| Total | 100 |

Total resin is increased and half of the Celrad 3701 in SB—2 is replaced with RDX 52225. RDX 52225 is an acrylated urethane. It improves flexibility and toughness and also has a good abrasion resistance. The viscosity is increased by so increasing the concentration of main resin ingredient. The purpose is to reduce the number of "defects" — and a reduced number of defects will be observed here. However, the coating exhibits "orange peel" after it is aluminized and it is not smooth enough for the optical disk application. Thus, this type subbing is definitely non-preferred.

| SB—5 | Parts, by wt. |
|---|---|
| Celrad 3701 | 36 |
| TMPTA | 25 |
| V-pyrol (GAF) | 36 |
| FC—430 | 1 |
| Irgacure 651 | 2 |
| Total | 100 |

The EHA in SB—2 is replaced by a V-pyrol diluent. V-pyrol is a more reactive vinyl-pyrolidone diluent for acrylated epoxy. It has a low volatility. With this ingredient, one might expect to reduce the defects number (less volatile material evaporation than for EHA during the spinning). However, this coating appears cloudy after it is aluminized and is non-preferred for the optical disk.

| SB—4 | Parts, by wt. (vs SB—2 |
|---|---|
| Celrad 3701 | 27 —— (36 |
| TMPTA | 34 —— (25 |
| EHA | 34 —— (36 |
| FC—430 | 1 —— (1 |
| Z—6020 (Dow Corning) | 1 |
| Irgacure 651 | 3 —— (2 |
| Total | 100 |

The Irgacure 651 photoinitiator in SB—2 is replaced by Irgacure 184. Irgacure 184 is a non-yellowing, highly efficient photoinitiator and will produce a better "thru cure" in the coating.

Z—6020 is a silane adhesion promoter and is added to improve subbing adhesion to the aluminum disk. The viscosity of this formula is reduced, so one can see the effect of viscosity on the coating. Because Irgacure 184 has a lower curing efficiency than Irgacure 651, this SB—6 film is hazy-looking after it is aluminized and is not completely cured. This is non-preferred for the optical disk.

**Claims**

1. A method of making an archival optical information record comprising a rigid aluminium substrate disk (d), a smoothing layer (sb), and optical recording layers (OL), characterised in that said method includes the steps of polishing and thereafter anodising at least one surface of said disk, and in that the composition of said smoothing layer includes an acrylated epoxy resin having a relatively high molecular weight, a multi-functional monomer adapted to promote cross-linking, an organic diluent having a lower molecular weight than said epoxy resin and adapted to react with said multi-functional monomer and polymerise with any of its groups not cross-linked with said epoxy resin, a surfactant, and a photo-initiator, all said components being combined, heated, filtered and applied to the anodised surface of the disk, whereafter they are cured by ultra-violet radiation.

2. A method as claimed in Claim 1, wherein the epoxy resin is a diacrylated ester of bisphenol-A.

3. A method as claimed in Claim 1 or Claim 2, wherein the multi-functional monomer is trimethylol propane triacrylate.

4. A method as claimed in Claim 1 or Claim 2, wherein the multi-functional monomer is trimethylol propane trimethacrylate.

5. A method as claimed in any of the preceding Claims, wherein the organic diluent is 2-ethylhexyl acrylate.

6. A method as claimed in any of Claims 1—4, wherein the organic diluent is a styrene.

7. A method as claimed in any of the preceding Claims, wherein said heating is carried out in air to about 24°C under clean-room conditions.

8. A method as claimed in any of the preceding Claims, wherein the smoothing layer is applied by spin-coating.

9. A method as claimed in any of the preceding Claims, wherein the thickness of the smoothing layer is between 10 and 50 μm.

10. A method as claimed in any of the preceding Claims, wherein the smoothing layer is cured by non-focused ultra-violet radiation.

11. A method according to any of the preceding Claims, wherein the surfactant is a nonionic fluorosurfactant.

12. A method according to any of Claims 1 to 10, wherein the surfactant is a fluorocarbon methacrylate.

13. A method according to any of Claims 1 to 10, wherein the surfactant is a fluorocarbon ester.

14. A method according to any of the preceding Claims, wherein the composition also includes an acrylated acrylic resin.

15. A method according to any of Claims 1 to 13, wherein the composition also includes an acrylated urethane.

16. A method according to any of the preceding Claims, wherein the organic diluent is a vinyl-pyrolidone.

# 0 162 633

**Patentansprüche**

1. Verfahren zur Herstellung einer Archivplatte für optische Informationen, die eine steife Aluminium-Substratscheibe (d), eine Glättschicht (sb) und optische Aufzeichnungsschichten (OL) umfaßt, dadurch gekennzeichnet, daß das Verfahren die Schritte des Polierens und nachfolgenden anodischen Oxidierens wenigstens einer Oberfläche der Scheibe umfaßt und dadurch, daß die Zusammensetzung der Glättschicht ein acryliertes Epoxyharz mit relativ hohem Molekulargewicht, ein multifunktionales, Quervernetzungen förderndes Monomer, ein organisches Verdünnungsmittel mit niedrigerem Molekulargewicht als das Epoxyharz, das zur Reaktion mit dem multifunktionellen Monomer und zur Polymerisation mit jeder von dessen, nicht mit dem Epoxyharz quervernetzten Gruppen geeignet ist, ein oberflächenaktives Mittel und einen Photoinitiator umfaßt, wobei alle Bestandteile gemischt, erwärmt, gefiltert und auf die anodisch oxidierte Oberfläche der Scheibe aufgetragen werden, woraufhin sie durch ultraviolette Strahlung gehärtet werden.

2. Verfahren nach Anspruch 1, bei dem das Epoxyharz ein Diacrylester von Bisphenol-A ist.

3. Verfahren nach Anspruch 1 oder 2, bei dem das multifunktionale Monomer Trimethylolpropantriacrylat ist.

4. Verfahren nach Anspruch 1 oder 2, bei dem das multifunktionale Monomer Trimethylolpropantrimethacrylat ist.

5. Verfahren nach einem der vorstehenden Ansprüche, bei dem das organische Verdünnungs mittel 2-Ethylhexyl-acrylat ist.

6. Verfahren nach einem der Ansprüche 1 bis 4, bei dem das organische Verdünnungsmittel ein Styrol ist.

7. Verfahren nach einem der vorstehenden Ansprüche, bei dem die Erwärmung in Luft auf ungefähr 24°C unter Reinraum-Bedingungen durchgeführt wird.

8. Verfahren nach einem der vorstehenden Ansprüche, bei dem die Glättschicht durch Schleuderbeschichtung (spin-coating) aufgetragen wird.

9. Verfahren nach einem der vorstehenden Ansprüche, bei dem die Dicke der Glättschicht zwischen 10 und 50 μm liegt.

10. Verfahren nach einem der vorstehenden Ansprüche, bei dem die Glättschicht durch nichtfokussierte ultraviolette Strahlung gehärtet wird.

11. Verfahren nach einem der vorstehenden Ansprüche, bei dem das oberflächenaktive Mittel ein nichtionisches fluorhaltiges oberflächenaktives Mittel ist.

12. Verfahren nach einem der Ansprüche 1 bis 10, bei dem das oberflächenaktive Mittel ein Fluorkohlenstoff-methacrylat ist.

13. Verfahren nach einem der Ansprüche 1 bis 10, bei dem das oberflächenaktive Mittel ein Fluorkohlenstoff-ester ist.

14. Verfahren nach einem der vorstehenden Ansprüche, bei dem die Zusammensetzung außerdem ein acryliertes Acrylharz enthält.

15. Verfahren nach einem der Ansprüche 1 bis 13, bei dem die Zusammensetzung außerdem ein acryliertes Urethan enthält.

16. Verfahren nach einem der vorstehenden Ansprüche, bei dem das organische Verdünnungsmittel ein Vinylpyrrolidon ist.

**Revendications**

1. Procédé de fabrication d'un support d'enregistrement optique d'informations en vue de l'archivage, composé d'un support en forme de disque (d) en aluminium rigide, d'une couche de lissage (sb) et de couches d'enregistrement optiques (OL), procédé caractérisé en ce qu'on polit, puis on anodise au moins une face du disque et en ce que la composition de la couche de lissage comprend une résine époxy acrylatée à poids moléculaire relativement élevé, un monomère multifonctionnel destiné à favoriser les liaisons transversales, un diluant organique à poids moléculaire plus faible que celui de la résine époxy et qui réagit avec le monomère multi-fonctionnel et polymérise avec n'importe lequel des groupes sans liaisons transversales avec la résine époxy, un surfactant et un photo-initiateur, tous ces composants étant combinés, chauffés, filtrés et appliqués sur la surface anodisée du disque, puis on durcit par un rayonnement ultraviolet.

2. Procédé selon la revendication 1, caractérisé en ce que la résine époxy est un ester diacrylaté de bisphénol A.

3. Procédé selon la revendication 1 ou la revendication 2, caractérisé en ce que le monomère multi-fonctionnel est du triméthylol propane triacrylate.

4. Procédé selon la revendication 1 ou la revendication 2, caractérisé en ce que le monomère multi-fonctionnel est du triméthylol propane triméthacrylate.

5. Procédé selon l'une quelconque des revendications précédentes, caractérisé en ce que le diluant organique est du 2-éthylhexyl acrylate.

6. Procédé selon l'une quelconque des revendications 1 à 4, caractérisé en ce que le diluant organique est un styrène.

7. Procédé selon l'une quelconque des revendications précédentes, caractérisé en ce que le chauffage se fait à l'air à une température d'environ 24°C dans des conditions de salle propre.

8. Procédé selon l'une quelconque des revendications précédentes, caractérisé en ce que la couche de lissage est appliquée par revêtement avec rotation.

9. Procédé selon l'une quelconque des revendications précédentes, caractérisé en ce que l'épaisseur de la couche de lissage est comprise entre 10 et 50 µm.

10. Procédé selon l'une quelconque des revendications précédentes, caractérisé en ce que la couche de lissage est durcie par un rayonnement ultraviolet non focalisé.

11. Procédé selon l'une quelconque des revendications précédentes, caractérisé en ce que le surfactant est un fluorosurfactant non ionique.

12. Procédé selon l'une quelconque des revendications 1 à 10, caractérisé en ce que le surfactant est du méthacrylate fluorocarboné.

13. Procédé selon l'une quelconque des revendications 1 à 10, caractérisé en ce que le surfactant est un ester fluorocarboné.

14. Procédé selon l'une quelconque des revendications précédentes, caractérisé en ce que la composition comprend également une résine acrylique acrylatée.

15. Procédé selon l'une quelconque des revendications 1 à 13, caractérisé en ce que la composition contient également un uréthane acrylaté.

16. Procédé selon l'une quelconque des revendications précédentes, caractérisé en ce que le diluant organique est du vinylpyrolidone.

## FIG.1.